# EUROPÄISCHE PATENTANMELDUNG

(11) **EP 1 471 132 A2**
(43) Veröffentlichungstag der Anmeldung: **27.10.2004**
(21) Anmeldenummer: 04009491.4
(22) Anmeldetag: 22.04.2004
(51) Int. Cl.: C10L 5/44

(54) **Formkörper, insbesondere Pressling**

(30) Priorität: 26.04.2003 DE 10318969
(71) Anmelder: Krallmann, Heinrich, Hermann, 49740 Haselünne (DE)
(72) Erfinder: Krallmann, Heinrich, Hermann, 49740 Haselünne (DE)
(74) Vertreter: Eisenführ, Speiser & Partner

(57) **Zusammenfassung**

Die Erfindung betrifft einen Formkörper, insbesondere Pressling, der Ölsaatpresskuchen 12 enthält. Des weiteren betrifft die Erfindung eine Verwendung von Gemischen aus Ölsaatpresskuchen 12 und faseriger Biomasse als Brennstoff.

## Beschreibung

Die Erfindung bezieht sich auf einen Formkörper, insbesondere Pressling.

Nachwachsende Brennstoffe erfreuen sich insbesondere für den Hausbrand wachsender Beliebtheit. Wichtigster nachwachsender Brennstoff ist zurzeit Holz. Brennholz ist jedoch nur dann kostengünstig, wenn Wälder in der Nähe sind. Holz ist jedoch teuer und nicht überall leicht verfügbar. Beispielsweise muss Holz in den Niederlanden und im Emsland über weite Strecken transportiert werden, da der eigene Baumbestand zur Versorgung nicht ausreicht.

Alternativ zu Holz werden oft Holzpresslinge verwendet, die aus Holzspänen hergestellt werden. Holzspäne sind Produktionsrückstände und sind daher zu geringen Preisen verfügbar. Weitere Vorteile von Holzpresslingen sind ein hoher Brennwert und ein geringer Aschegehalt, weshalb sich bei der Verbrennung wenig Schlacke bildet. In waldarmen Regionen ist jedoch auch in der Regel wenig Holz verarbeitende Industrie angesiedelt, sodass Produktionsrückstände nicht zur Verfügung stehen. Zusätzlich ist die mechanische Stabilität größerer Holzpresslinge relativ gering und es kommt beim Verbrennen zu störender Staubentwicklung, da die einzelnen Holzstückchen nicht stark genug aneinander haften.

Als Alternative zu Holzspänen eignet sich Stroh zur Herstellung von Presslingen. Eine andere Alternative sind Mischpresslinge aus Olivenkernen und Getreidesiebresten. Nachteil ist hier der hohe Aschegehalt, was die Anwendung im Hausbrand unattraktiv macht.

Der Erfindung liegt daher die Aufgabe zugrunde, einen Formkörper, insbesondere Pressling, zur Verfügung zu stellen, der mechanisch stabil und gleichzeitig kostengünstig ist.

Diese Aufgabe wird erfindungsgemäß gelöst durch einen Formkörper, insbesondere Pressling, der Ölsaatpresskuchen enthält. Der Formkörper ist hergestellt durch Pressen, Backen bzw. Verbacken, Sintern bzw. sinterähnliches Behandeln und/oder sonstiges Verfestigen, insbesondere unter Wärmezufuhr, der einzelnen Bestandteile des Formkörpers. Ölsaatpresskuchen entsteht z.B. als Pressrückstand bei der Herstellung von Öl aus Ölsaaten. Die im Ölsaatpresskuchen enthaltenen Ölrückstände wirken als Bindemittel zwischen den Bestandteilen aus Ölsaatpresskuchen und den anderen Bestandteilen des Formkörpers. Das führt zu einer erhöhten mechanischen Stabilität, beispielsweise gegen Auseinanderbrechen, und zu deutlich verminderter Staubentwicklung. Weitere Bestandteile des Formkörpers können beispielsweise Getreidesiebreste, Stroh, aber insbesondere auch Rückstände der Pflanzenfaserproduktion sein.

Ölsaaten werden zunehmend angebaut, um für andere Zwecke als die der Ernährung verwendet zu werden. Hierunter zählt beispielsweise die Verwendung von Rapsölmethylester als Treibstoff. Diese zusätzlichen Verwendungen sichern auch in der Zukunft günstige Preise der entsprechenden Produktionsrückstände, wie beispielsweise dem Rapspresskuchen.

Rückstände aus der Produktion pflanzlicher Fasern sind ein kostengünstiger Grundstoff für die Herstellung von brennbaren Presslingen. Hier sind insbesondere Flachs, Hanf, Sisal, Schilf, etc., zu nennen. Derartige faserigen Reststoffe werden bisher beispielsweise als Einstreu verwendet. Der Anbau von Faserpflanzen hat in der zurückliegenden Zeit stark zugenommen, da die Fasern beispielsweise in der Automobiloder Papierindustrie zunehmend Verwendung finden. Aus diesem Grund stehen Produktionsrückstände in großer Menge zu sehr geringen Preisen zur Verfügung. Es zeigt sich jedoch, dass sich derartige Rückstände der Pflanzenfaserherstellung, wie beispielsweise Hanfholz, allein schlecht zu Presslingen verarbeiten lassen, da die Bindung der einzelnen Partikel untereinander sehr gering ist. Die Bindewirkung der Bestandteile aus Ölsaatpresskuchen verleiht dem Formkörper eine höhere mechanische Stabilität und unterdrückt Staubentwicklung. Aus diesem Grund können die entstehenden Formkörper gut als Brennholzersatz im Hausbrand eingesetzt werden.

Ölsaatpresskuchen weist zudem eine hohe Dichte und eine im Vergleich zu Holz sehr dunkle Farbe auf. Bei Formkörpern, in denen zusätzlich sehr helle Pflanzenfaserproduktionsrückstände verwendet werden, die meist eine recht geringe Dichte haben, entsteht durch den Ölsaatpresskuchen die gewünschte Farbe und Dichte.

Der durch die Ölrückstände im Ölsaatpresskuchen bedingte, relativ hohe Brennwert führt zudem dazu, dass auch Stoffe beigemengt werden können, die aufgrund ihres zu hohen Wassergehaltes ansonsten nicht verwendet werden können. Als Beispiele können hier Laub, Rasenschnittquetschmasse oder Rübenkraut genannt werden.

Vorteilhafte Ausführungsformen ergeben sich aus den Unteransprüchen sowie aus den anhand der beigefügten Zeichnungen erläuterten Ausführungsbeispiele der vorliegenden Erfindung. Es zeigt
- Fig. 1: einen zylindrischen Pressling,
- Fig. 2: einen Pressling in Scheitform und
- Fig. 3: einen quaderförmigen Pressling.

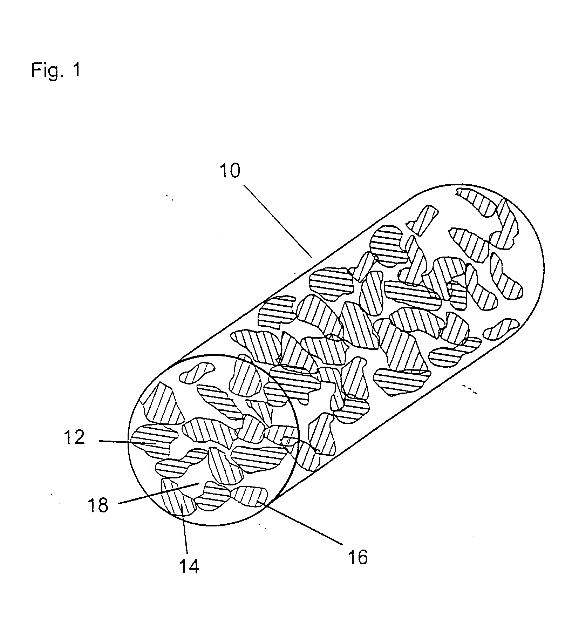

Fig. 1 zeigt einen Pressling 10. Angedeutet sind die verschiedenen Komponenten, darunter Bestandteilen aus Ölsaatpresskuchen 12, die gleichmäßig über den Pressling 10 verteilt sind. Ölsaatpresskuchen 12 ist der Pressrückstand aus der Herstellung von Öl aus Ölsaaten, wie beispielsweise Raps, Soja, Senf, Erdnüssen, Sonnenblumen, Maiskeimlingen, Leinsamen, Rizinus, Kakao, usw.. Weitere Bestandteile des Presslings 10 sind Hanfholz 14 und Kakaoschalen 16 zu gleichen Teilen.

Der Pressling 10 ist hergestellt durch Zusammenpressen der einzelnen, gut gemischten Bestandteile mittels einer handelsüblichen Presse. Insbesondere die faserigen Bestandteil wie das Hanfholz 14 bewirken, dass auch nach dem Pressen zwischen den einzelnen Bestandteilen luftgefüllte Zwischenräume 18 verbleiben. Die luftgefüllten Zwischenräume 18 haben einen günstigen Einfluss auf die Verbrennung. Aus diesem Grund können derartige Mixpresslinge gut als Kaminholzersatz verwendet werden.

Die Presslinge 10 sind aufgrund ihrer günstigen mechanischen Eigenschaften nicht auf bestimmte Formen beschränkt. Neben sehr kleinen Presslingen 10, die als Pellets bezeichnet werden, und die in speziellen Kesselanlagen verfeuert werden, sind auch größere Presslinge 10 herstellbar.

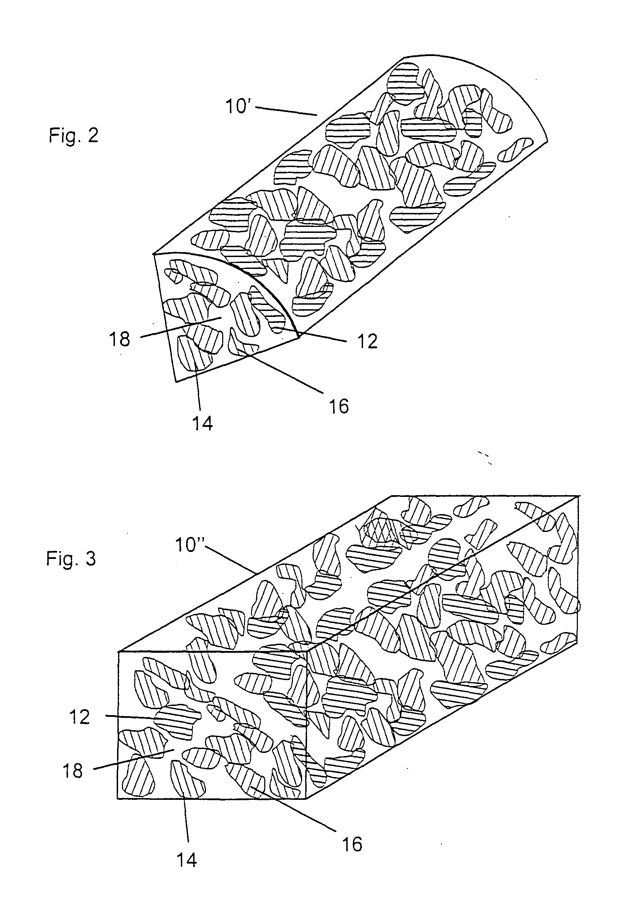

Fig. 2 zeigt einen Pressling 10' in alternativer Form als Scheit. In Fig. 3 ist ein Pressling 10" gezeigt, der als Quader ausgebildet ist. Weitere mögliche Ausführungsformen sind Briketts, Stangen, Röhren, Kissen usw..

Ein bevorzugtes Ausführungsbeispiel der Erfindung sieht vor, den Anteil von Ölsaatpresskuchen 12 am Pressling 10 über 20% zu wählen, da in diesem Fall die Bindewirkung des Ölsaatpresskuchen 12 gut ausgeprägt ist und mechanisch stabile Presslinge 10 erhalten werden, die eine geringe Staubentwicklung zeigen.

Als besonders gut geeignet haben sich Anteile an Ölsaatpresskuchen 12 von 30 - 50% herausgestellt. Ein Pressling 10 mit hohem Brennwert, guten Flammeneigenschaften, holzähnlicher Farbe und angenehmem Geruch wird erhalten durch Anteile von 30% Hanfholz 14, 50% Rapsölpresskuchen und 20% Kakaoschalen 16. Ein weiterer bevorzugter Pressling 10 hat die Anteile: 30% Rapsölpresskuchen, der Rest ist zu gleichen Teilen Hanfholz 14, Stroh, Kakaoschalen 16 und Holzspäne.

Ein weiterer bevorzugter Pressling weist einen Anteil von 20 bis 60%, insbesondere im wesentlichen 40%, einer Hanfmischung, insbesondere aus Hanfschaben bzw. Hanfspänen, einen Anteil von 8 bis 35%, insbesondere im wesentlichen 20%, von natürlichem Rapsschrot als Bindemittel sowie einen Anteil von 20 bis 60%, insbesondere im wesentlichen 40%, von naturbelassenem und unbehandelten Holzspänen auf.

Für die Flammeneigenschaften spielt der Anteil an luftgefüllten Zwischenräumen 18 eine große Rolle. Um eine große Zahl an derartigen luftgefüllten Zwischenräumen 18 zu erhalten, hat es sich als günstig herausgestellt, neben Bestandteilen aus Ölsaatpresskuchen 12 Bestandteile aus faseriger Biomasse zu verwenden, die insbesondere aus der Produktion von Pflanzenfasern stammen. Derartige Rückstände wie Hanfholz 14 behalten auch beim Pressen zum großen Teil luftgefüllte Zwischenräume 18.

Kakaoschalen 16 weisen neben einer guten Bindewirkung eine dunkle Farbe auf. Bestandteile aus Kakaoschalen 16 verleihen dem Pressling 10 daher eine dunkle, holzartige Tönung. Gleichzeitig führen Geruchstoffe in den Kakaoschalen 16 zu einem angenehmen Geruch des Presslings 10.

Durch die Bindewirkung der Bestandteile aus Ölsaatpresskuchen 12 können größere, mechanisch stabile Presslinge 10 hergestellt werden. Je nach gewünschter Verwendung haben sich insbesondere Breiten zwischen 5 cm und 40 cm, Höhen zwischen 1 cm und 15 cm und Tiefen zwischen 5 cm und 15 cm als günstig erwiesen.

Ölsaatpresskuchen 12 weist eine relativ hohe Dichte auf, faserige Bestandteile meist eine geringe. Durch geeignete Mischung verschiedener Bestandteile wird bevorzugt eine Dichte eingestellt, die vom Kunden als holzähnlich empfunden wird.

Es kann insbesondere beim Einsatz der Presslinge 10 als Brennholzersatz in Kaminen sinnvoll sein, Formen zu wählen, die für die Verbrennung besonders geeignet sind und eine für den Betrachter angenehme Form haben. So verhindert eine kantige Form wie die des Quaders das Abrollen der Presslinge 10, wenn sie in einem Kamin gestapelt werden. Zackige Formen ermöglichen Stapel mit großen luftgefüllten Zwischenräumen 18. Durch Variation des Ölsaatpresskuchenanteils, Größe der Presslinge 10 und etwaige innen liegende Hohlräume lassen sich zudem Brenndauer und Anbrennverhalten einstellen.

## Patentansprüche

1. Formkörper, insbesondere Pressling,
**dadurch gekennzeichnet, dass**
er Ölsaatpresskuchen (12) enthält.

2. Formkörper nach Anspruch 1,
**dadurch gekennzeichnet, dass**
er einen Anteil an Ölsaatpresskuchen (12) von über 20% aufweist.

3. Formkörper nach Anspruch 2,
**dadurch gekennzeichnet, dass**
er einen Anteil an Ölsaatpresskuchen (12) zwischen 30% und 50% aufweist.

4. Formkörper nach einem der vorstehenden Ansprüche,
**dadurch gekennzeichnet, dass**
er zusätzlich faserige Biomasse enthält.

5. Formkörper nach Anspruch 4,
**dadurch gekennzeichnet, dass**
die faserige Biomasse aus der Produktion von natürlichen Fasern stammt.

6. Formkörper nach einem der vorstehenden Ansprüche,
**dadurch gekennzeichnet, dass**
er zusätzlich Hanfholz (14) enthält.

7. Formkörper nach einem der vorstehenden Ansprüche,
**dadurch gekennzeichnet, dass**
er Rückstände der Kakaoverarbeitung enthält.

8. Formkörper nach einem der vorstehenden Ansprüche,
**dadurch gekennzeichnet, dass**
er Zuckerrüben oder Zuckerrübenreste enthält.

9. Formkörper nach einem der vorstehenden Ansprüche,
**dadurch gekennzeichnet, dass**
er eine Breite zwischen 5 cm und 40 cm hat aufweist.

10. Formkörper nach einem der vorstehenden Ansprüche,
**dadurch gekennzeichnet, dass**
er eine Höhe zwischen 1 cm und 15 cm aufweist.

11. Formkörper nach einem der vorstehenden Ansprüche,
**dadurch gekennzeichnet, dass**
er eine Tiefe zwischen 5 cm und 15 cm aufweist.

12. Formkörper nach einem der vorstehenden Ansprüche,
**dadurch gekennzeichnet, dass**
er als Grillbrikett ausgebildet ist.

13. Formkörper nach einem der vorstehenden Ansprüche,
**dadurch gekennzeichnet, dass**
er als Pellet ausgebildet ist.

14. Formkörper nach einem der vorstehenden Ansprüche,
**dadurch gekennzeichnet, dass**
er Bestandteile unterschiedlicher Farbe aufweist, deren Zusammensetzung bzw. Mischungsverhältnis derart gewählt ist, dass der Formkörper (10) eine holzähnliche Struktur aufweist.

15. Formkörper nach einem der vorstehenden Ansprüche,
**dadurch gekennzeichnet, dass**
er Bestandteile unterschiedlicher Dichte aufweist, deren Zusammensetzung bzw. Mischungsverhältnis derart gewählt ist, dass der Formkörper (10) eine holzähnliche Dichte aufweist.

16. Formkörper nach einem der vorstehenden Ansprüche,
**dadurch gekennzeichnet, dass**
er eine gewellte, gezackte oder anderweitig geformte Oberfläche aufweist.

17. Formkörper nach einem der vorstehenden Ansprüche,
**dadurch gekennzeichnet, dass**
seine Form verbrennungsfördernd ausgebildet ist.

18. Formkörper nach einem der vorstehenden Ansprüche,
**dadurch gekennzeichnet, dass**
seine Form der eines Holzscheits entspricht.

19. Formkörper nach einem der vorstehenden Ansprüche,
**dadurch gekennzeichnet, dass**
er einen Anteil von 20 bis 60%, insbesondere im wesentlichen 40%, einer Hanfmischung, insbesondere aus Hanfschaben bzw. Hanfspänen, einen Anteil von 8 bis 35%, insbesondere im wesentlichen 20%, von natürlichem Rapsschrot als Bindemittel sowie einen Anteil von 20 bis 60%, insbesondere im wesentlichen 40%, von naturbelassenem und unbehandelten Holzspänen aufweist.

20. Verwendung von Gemischen aus Ölsaatpresskuchen (12) und faseriger Biomasse als Brennstoff.

21. Verwendung nach Anspruch 20,
**dadurch gekennzeichnet, dass**
das Gemisch einen Anteil von 20 bis 60%, insbesondere im wesentlichen 40%, einer Hanfmischung, insbesondere aus Hanfschaben bzw. Hanfspänen, einen Anteil von 8 bis 35%, insbesondere im wesentlichen 20%, von natürlichem Rapsschrot als Bindemittel sowie einen Anteil von 20 bis 60%, insbesondere im wesentlichen 40%, von naturbelassenem und unbehandelten Holzspänen aufweist.
